# EUROPEAN PATENT SPECIFICATION

(11) **EP 3 228 939 B1**
(45) Date of publication and mention of the grant of the patent: **05.08.2020**
(21) Application number: 16164569.2
(22) Date of filing: 08.04.2016
(51) Int. Cl.: F23R 3/34, F23R 3/28, F02C 7/22, F02C 9/28

(54) **METHOD FOR COMBUSTING A FUEL, AND COMBUSTION APPLIANCE**
VERFAHREN ZUR VERBRENNUNG EINES BRENNSTOFFS UND VERBRENNUNGSVORRICHTUNG
PROCÉDÉ DE COMBUSTION D'UN COMBUSTIBLE ET APPAREIL À COMBUSTION

(43) Date of publication of application: 11.10.2017
(73) Proprietor: Ansaldo Energia Switzerland AG, 5401 Baden (CH)
(72) Inventor: TERHAAR, Steffen, 5400 BADEN (CH); GÜTHE, Felix, 4056 BASEL (CH)
(74) Representative: Bernotti, Andrea

(56) References cited:
- EP-A1- 2 407 715
- EP-A1- 2 434 222
- EP-A2- 2 685 172
- WO-A1-2013/002664
- US-A1- 2013 266 902
- US-A1- 2014 260 269
- US-B1- 6 332 313

## Description

### TECHNICAL FIELD

The present disclosure relates to a method for combusting a fuel, in particular in a gas turbine engine.

### BACKGROUND OF THE DISCLOSURE

Axially staged combustion has the potential to enhance the turndown capabilities, that is, improve part load behavior, and reduce nitric oxide emissions at high load compared to single stage combustion systems. In axially staged combustion, a fraction of the total fuel is combusted in a first combustion stage. The resulting combustion products are then directed to a second combustion stage, and further fuel and air, or, more generally speaking, oxidizer, are discharged into the hot stream of combustion products and a second stage combustion is effected. A key design parameter for staged combustion is the residence time of the fluid in the first and second stage. A further key design parameter is the distribution of oxidizer between the two stages. To significantly enhance the turndown capabilities to very low loads, it is necessary to be able to switch on the second combustion stage while ramping up the load and switch off the second combustion stage when ramping down the load. In order to achieve reduced nitric oxide emissions compared to a single stage burner, and at the same time achieve a sufficient fuel burn-out in order to avoid carbon monoxide and unburned hydrocarbons or other incompletely burnt fuel residues emissions, the second combustor stage has to run hotter than the first stage, and the second stage residence time has to be kept short at least at high loads.

US 8,112,216 discloses a method and device for combusting fuel in a gas turbine engine wherein the fuel is combusted in a first combustion stage, and further fuel is injected into the thus generated combustion products immediately upstream the turbine. The further fuel is combusted with the combustion products from the first combustion stage.

EP 2 407 715 A1 discloses a method for combusting a fuel in a gas turbine engine. According to the method, an oxidizer mass flow, with a first oxidizer partial mass flow, is provided. A fuel is combusted in the first oxidizer partial mass flow in a first combustion stage thus providing a mass flow of combustion products, which is guided through a duct in a flow direction. A mass flow of a first supplementary fluid is discharged into the duct in a discharge direction essentially aligned with the flow direction such as to provide a flow of the first supplementary fluid essentially aligned with the flow of combustion products. The first supplementary fluid is selectively provided as one of an oxidizer and a premixed fuel/oxidizer mixture. Further mass flows of a second supplementary fluid and of a third supplementary fluid are discharged into the duct, both being selectively provided as one of an oxidizer and a premixed fuel/oxidizer mixture. The second supplementary fluid and the third supplementary fluid are discharged essentially aligned with the flow direction. The second supplementary fluid and the third supplementary fluid are discharged laterally offset with respect to the discharged mass flow of first supplementary fluid and across the flow cross section of the duct, such as to provide the mass flows of supplementary fluids as laterally stratified layers of the respective supplementary fluids.

Other examples of known methods are disclosed in US 6 332 313 B1, in US 2014/260269 A1, in WO 2013/002664 A1, in US 2013/266902 A1, in EP 2 685 172 A2 and in EP 2 434 222 A1.

### LINEOUT OF THE SUBJECT MATTER OF THE PRESENT DISCLOSURE

It is an object of the present disclosure to disclose a method for combusting a fuel and a combustion appliance for carrying out the method. In one aspect a method and a combustion appliance shall be disclosed which exhibit good part load operation behavior even at very low combustion loads. A low combustion load means in this respect carrying out the method and operating the appliance at a low overall equivalence ratio, that is, the combustion process is globally carried out under very lean conditions. Good part load operation behavior includes both stable combustion with no flame-off tendency, and a good burn-out of the fuel supplied, such as not to emit vast amounts of incompletely burnt fuel residues, such as for instance carbon monoxide and/or unburned hydrocarbons, at part load. At the same time it is required to limit the thermally induced formation of nitric oxides at high load. In another aspect it is an object of the present disclosure to disclose a method in which a control of the air, or, more generally speaking, oxidizer distribution may be omitted. Thus, the control of the method as well as an appliance for carrying out the method can be largely simplified.

In still a further aspect a method and a combustion appliance shall be disclosed which are particularly well suitable to be used in the framework of a gas turbine engine.

This is achieved by the subject matter described in claim 1.

Further effects and advantages of the disclosed subject matter, whether explicitly mentioned or not, will become apparent in view of the disclosure provided below.

Accordingly disclosed is a method for combusting a fuel, the method comprising providing an oxidizer mass flow, providing a first oxidizer partial mass flow of said oxidizer mass flow and combusting a fuel in the first oxidizer partial mass flow thus providing a mass flow of combustion products. The mass flow of combustion products is provided to a duct and is ducted through said duct in a flow direction. A mass flow of a first supplementary fluid is discharged into said duct. The method further comprises discharging the mass flow of the first supplementary fluid in a discharge direction at least essentially aligned with the flow direction such as to provide a flow of the first supplementary fluid at least essentially aligned with the flow of combustion products, wherein the first supplementary fluid is selectively provided as one of an oxidizer and a premixed fuel/oxidizer mixture. The combustion products commonly comprise combusted fuel components as well as residual oxidizer.

The fuel in the first oxidizer partial mass flow may in certain instances be combusted in a lean premix combustion as known from the art. In that a supplementary fluid is discharged in a discharge direction at least essentially aligned with the flow direction of the mass flow of combustion products, the supplementary fluid is provided as a fluid layer within the duct. Shear forces at an interface between the fluid layer and the mass flow of combustion products are minimized. The mixing between the supplementary fluid and the combustion products is thus at least largely avoided, mixing only takes place due to residual shear forces and diffusion effects at the interface between the supplementary fluid and the mass flow of combustion products. If a supplementary fluid is provided as a premixed fuel/oxidizer mixture, the fuel will be combusted in the oxidizer fraction of the supplementary fluid. The local combustion temperatures are thus maintained high, ensuring sufficiently high temperatures for complete fuel burn/out even at low load.

In particular, the mass flow ratio of oxidizer supplied in the mass flow of supplementary fluid or the mass flows of supplementary fluids, related to the total oxidizer mass flow participating in the combustion process, that is, the sum of all oxidizer mass flows supplied in the mass flow of supplementary fluid or the mass flows of supplementary fluids plus the first oxidizer partial mass flow, is not actively controlled, or is constant. Said mass flow ratio is also referred to as the "second stage air split", or more generally "oxidizer split", which refers to the mass of oxidizer discharged in the second combustion stage in axially staged combustion stage when related to the total combustor oxidizer mass flow. That is, no complex fluid management system for the oxidizer is requires. It is understood that the oxidizer mass flow considerably exceeds the fuel mass flow, and may in a gas turbine engine easily be in a range of several 100 kg/s.

The method comprises discharging at least one further mass flow of a further supplementary fluid into the duct, wherein the further supplementary fluid is selectively provided as one of an oxidizer and a premixed fuel/oxidizer mixture, discharging the at least one further mass flow at least essentially aligned with the flow direction, wherein the at least one further mass flow is discharged laterally offset with respect to the discharged mass flow first supplementary fluid and across the flow cross section of the duct, such as to provide the mass flows of supplementary fluids as laterally stratified layers of the respective supplementary fluids. "Laterally" in this respect is referred to the flow direction of the fluids.

It is understood that the oxidizer provided as a supplementary fluid or provided in the premixed fuel/oxidizer mixture may in particular be a second oxidizer partial mass flow of the oxidizer mass flow. However, it is not required, while possible, that the entire oxidizer mass flow is provided to the above described combustion process. The oxidizer may be understood as any fluid containing an agent suitable to react with the fuel in an exothermal reaction, thus releasing heat. The oxidizer may in particular embodiments be air, and more in particular compressed air provided by a compressor, and even more in particular by a compressor of a gas turbine engine. The method may in this respect comprise compressing an oxidizer, in particular air, in a compressor, and in particular in a compressor of a gas turbine engine, and providing the compressed fluid as the oxidizer mass flow. In said case it is understood that partial flows of the oxidizer mass flow may bypass the herein described combustion process, for instance for cooling purposes and so forth. The oxidizer may, in other instances, be or comprise still oxygen rich, or, more generally speaking, oxidant rich flue gas from another combustion process. It is understood that it is not intended to provide a comprehensive list of oxidizers.

The method may in other aspects comprise providing the entirety of mass flows from the described combustion process, after combusting any fuel provided therein, to an expansion turbine of a gas turbine engine.

In discharging the mass flows of supplementary fluids in a discharge direction which is at least essentially aligned with the flow of combustion products, and which are at least essentially aligned with each other, and moreover laterally offset with respect to each other, rapid intermixing of the flows is at least essentially avoided, thus providing each flow of a supplementary fluid as a layer, and providing multiple flows of supplementary fluids as stratified layers. As will be readily appreciated, laterally offset in this respect means laterally with respect to the discharge directions, such that the mass flows of supplementary fluid do not overlap each other in the flow cross section.

The method comprises discharging at least two further mass flows of further supplementary fluids, wherein each further mass flow is discharged with a different lateral offset with respect to the flow of the first supplementary fluid and across the flow cross section of the duct, such as to provide the mass flows of supplementary fluids as laterally stratified layers of the respective supplementary fluid. This implicitly states that each mass flow of a supplementary fluid is discharged laterally offset to each other, such that two mass flows of supplementary fluid do not overlap each other in the flow cross section. In more particular embodiments each layer of further supplementary fluid is provided laterally adjacent at least one other layer of supplementary fluid.

In that all supplementary fluids are discharged in a discharge direction at least essentially aligned with the flow direction of the mass flow of combustion products, and in turn aligned with each other, the supplementary fluids are provided as fluid layers within the duct. Shear forces at interfaces between the fluid layers themselves and between the fluid layers and the mass flow of combustion products are minimized. The mixing between the different stratified layers of supplementary fluids as well as between each layer of a supplementary fluid and the combustion products is thus at least largely avoided. Mixing only takes place due to residual shear forces and diffusion effects at the named interfaces. If a supplementary fluid is provided as a premixed fuel/oxidizer mixture, the fuel will be combusted in the oxidizer fraction of the supplementary fluid. The local combustion temperatures are thus maintained high, ensuring sufficiently high temperatures for complete fuel burn-out even at low load such as to avoid or at least largely reduce pollutant emissions of incompletely burnt fuel residues from the combustion process.

In certain embodiments the method may comprise discharging each mass flow of supplementary fluid at a different location along the flow direction. This allows, when a fuel/oxidizer mixture is discharged, to influence the residence time of a fuel, or reactants, respectively, in a combustion zone, dependent on the thermal load of the combustion device in discharging a fuel/oxidizer mixture or a multitude of fuel/oxidizer mixture at an appropriate location. Thus, the burn-out rate of the fuel as well as the formation of thermally induced nitric oxides may be controlled.

The following passage relates to the control of the distribution of fuel in the described method. Said control is performed dependent on the thermal load at which a combustion appliance is operated, and/or on the load at which a gas turbine engine is operated.

It will be appreciated that thermal load is in this respect to be understood as a mass flow specific or a combustion volume specific thermal load, which may, on the one hand be considered as a mass flow or combustion volume specific heat release rate, in turn correlated with the overall fuel/oxidizer ratio or equivalence ratio of the overall combustion process. On the other hand, if thermal load is understood as a parameter describing the conditions of combustion, the temperature of the oxidizer provided needs to be taken into account in determining the thermal load. For instance when the combustion process is performed in a gas turbine engine similar overall equivalence ratios may be found at different compressor pressure ratios, ambient conditions and so forth. These may largely influence the temperature of the oxidant. Moreover, the thermal load may be related to a sum of all oxidizer mass flows provided to the combustion appliance, or is involved in performing the method as described, respectively. Also, in particular if the method is performed in a gas turbine engine, said total combustion oxidizer mass flow may depend on the load of the gas turbine engine if for instance a variable inlet guide vane position is varied.

It is thus understood that neither a megawatts thermal load of a combustion appliance nor a megawatts power output of a gas turbine engine in which the method is performed may be sufficient to characterize the conditions of the combustion process. It is thus known to relate for instance the overall equivalence ratio or the gas turbine power output to further influential data and thus form load parameters, describing for instance the thermal load of a combustion appliance or the load state of a gas turbine engine - which in turn is indicative of the thermal load of the internal combustion - in order to control fuel distribution. The skilled person will readily be able to determine an appropriate load parameter or a set of appropriate load parameters for controlling the operation of the combustion appliance.

When the herein disclosed method is performed in an appropriate combustion appliance, and the combustion appliance is operated at different thermal loads, the method may comprise providing each mass flow of a supplementary fluid as a mass flow of oxidizer when the combustion appliance is operated at or below a first threshold value of a thermal load parameter, and providing the mass flow of at least one supplementary fluid as a premixed fuel/oxidizer mass flow when the combustion appliance is operated above the first threshold value of the thermal load parameter.

Thus, if the combustion appliance is operated at a low thermal load, that is, at a low overall fuel/oxidizer equivalence ratio, fuel is only provided to the first oxidizer partial mass flow and combusted in a first combustion stage. Thus, a sufficient equivalence ratio can be provided when combusting a fuel in the first oxidizer partial mass flow, or in a first combustion stage, respectively. A stable and complete combustion of the fuel in the first oxidizer partial mass flow is thus achieved, resulting in virtually no carbon monoxide and/or other incompletely burnt fuel residues being present in the mass flow of combustion products. Above a first threshold load, a part of the total fuel mass flow is shifted to at least one supplementary fluid. Thus, the thermally induced formation of nitric oxides due to the combustion of fuel in the first oxidizer partial mass flow may effectively be limited. The fuel in a supplementary fluid is provided as a premixed fuel/oxidizer mixture, and in particular as an understochiometric lean premixed fuel/oxidizer mixture. The threshold load is chosen such that the temperature of the combustion products from combusting the fuel in the first oxidizer partial mass flow is sufficiently high to allow auto-ignition of a premixed fuel/oxidizer mixture due to said temperature, while still keeping the thermally induced formation of nitric oxides upon combustion of the fuel in the first oxidizer partial mass flow at an acceptably low level. For one instance said temperature may be at least approximately 1800K. This premixed furl/oxidizer mixture will accordingly spontaneously ignite when getting into contact with the combustion products at an interface between the two flows. As noted, the fuel/oxidizer mixture is discharged such as to avoid rapid mixing with other fluids, and thus the combustion of fuel provided by the fuel/oxidizer mixture will be spatially limited. Thus, the combustion temperature of the premixed mixture is maintained sufficiently high to ensure a complete burn-out of the premixed fuel and thus the avoidance of incomplete combustion residuals. Due to the combustion of a premixed fuel/oxidizer mixture, the thermally induced formation of nitric oxides is on the other hand low.

The method comprises operating the gas turbine engine at different loads of the gas turbine engine, providing each of the mass flows of a supplementary fluid as a mass flow of oxidizer when the gas turbine engine is operated at or below a first load of the gas turbine engine, and providing the mass flow of at least one supplementary fluid as a premixed fuel/oxidizer mass flow when the gas turbine engine is operated above the first load of the gas turbine engine. The benefits will be similar to those above.

The method comprises providing a supplementary fluid as oxidant when the combustion appliance and/or the gas turbine engine is operated at or below a respective threshold value of a load parameter, and providing the supplementary fluid as a premixed fuel/oxidizer mixture when the combustion appliance and/or the gas turbine engine is operated above the respective threshold value of the load parameter. It is understood that, if multiple mass flows of supplementary fluid are discharged into the mass flow of combustion products, the threshold value load may be different for each of the supplementary fluid mass flows. It is thus achieved that a number of supplementary fluids which are provided as a premixed fuel/oxidizer mixture increases stepwise with increasing thermal load of the combustion appliance and/or load of the gas turbine engine, respectively, and decreases with a decreasing load. Varying the number of supplementary fluid mass flows which are provided as a fuel/oxidizer mixture may serve to maintain the equivalence ratio of the premixed fuel/oxidizer mixtures within an admissible range which allows to achieve the named effects of low nitric oxides formation along with a complete combustion of the fuel.

A respective threshold value of the load parameter may be chosen the higher the further downstream of the flow of combustion products the respective supplementary fluid is discharged. Thus, with an increasing load, fuel in the supplementary fluid is discharged at increasingly downstream positions of the flow of combustion products and accordingly closer to a downstream end of a second combustion zone in which the fuel provided in the supplementary fluids is combusted. In turn, with increasing load the residence time of the reactants in the combustion zone is decreased, supporting combustion with low nitric oxides formation. On the other hand, with decreasing load the residence time of reactants in the combustion zone is increased, supporting the complete burnout of the fuel.

It will be readily understood that a threshold value of a control load parameter for controlling providing a mass flow of a supplementary fluid as an oxidizer, that is, pure oxidizer with no fuel provided therein, or as a fuel/oxidizer mixture may be different for changing form oxidant to fuel/oxidant mixture than vice versa. In particular, changing from fuel/oxidizer to oxidizer when ramping down the load may be effected at a lower threshold value than switching from oxidizer to fuel oxidizer when ramping up the load. Such a control hysteresis enhances in a well-known manner control stability.

In certain embodiments, 40% to 60%, in specific examples at least approximately 50%, of the total combustion oxidizer mass flow participating in the method, or provided to a combustion appliance, respectively, that is the first oxidizer partial mass flow plus the sum of all oxidizer mass flows provided in all mass flows of supplementary fluids, is provided as a first oxidizer partial mass flow. In a specific instance supplemental fluid flows may be provided at three different discharge locations in the flow direction of the combustion products. The location in the flow direction has an impact on the residence time of fuel and fuel residuals in the combustion zone. The further downstream a supplementary fluid is discharged, the shorter are the residence times. In more specific embodiments 20% to 30% of the total combustion oxidizer mass flow may be discharged at a first, most upstream discharge location, which may in a more specific embodiment be at least approximately 25%. A combustion residence time of fuel discharged therewith may for an instance be 7 ms. 10% to 20% of the total combustion oxidizer mass flow may be discharged at a second, middle discharge location arranged downstream from the first discharge location, which may in a more specific embodiment be at least approximately 15%. A residence time of fuel discharged therewith may for an instance be 5 ms. 5% to 15% of the total combustion oxidizer mass flow may be discharged at a third, most downstream discharge location, which may in a more specific embodiment be at least approximately 10%. A residence time of fuel discharged therewith may for an instance be 3 ms.

In certain embodiments the supplementary fluid is discharged the closer to the wall of the duct the further downstream it is discharged. The further downstream discharged flows of supplementary fluids may be provided to envelop the further upstream discharged flows. In the example provided above, the supplementary fluid discharged at the first discharge location in the direction of flow may be provided as a central discharge flow. The central, first discharge flow may be enveloped by the second discharge flow discharged at the second location in the flow direction. The second discharge flow may in turn be enveloped by the third discharge flow discharged at the third, most downstream location.

The fuel which is combusted in a first combustion stage in the first oxidizer partial mass flow may be apportioned such that the temperature of the combustion products reaches at least approximately 1800K before fuel is added to any of the mass flows of supplementary fluid to ensure spontaneous auto-ignition of fuel provided in a supplementary fluid. When fuel is provided in a supplementary fluid, the fuel mass flow combusted in the first stage in the first oxidizer partial mass flow may be controlled such as to maintain the temperature of the respective combustion products at least approximately constant at said 1800K. It is understood that the temperature of a final hot gas flow as a product of the method exceeds said temperature of the first stage combustion products.

In another aspect, which is not part of the invention, a combustion appliance is disclosed which is particularly suitable for carrying out a method as described above. The combustion appliance comprises a first combustion stage or zone, and a duct provided to receive combustion products from the first combustion stage. A fuel/oxidizer premix device is provided. The fuel/oxidizer premix device, at a discharge end thereof, is in fluid communication with a discharge appliance provided in the duct, wherein the discharge appliance is arranged and configured to discharge a fluid received from the fuel/oxidizer premix device into a flow of combustion products in the duct, and at least essentially aligned with a flow direction of the flow of combustion products. It is understood that more than one discharge fuel/oxidizer premix device may be provided, each being in fluid communication with at least one discharge appliance. Each discharge appliance is in fluid communication with one premix device such as to discharge only fluid received from one premix device. When fuel is provided to a premix device, the fluid discharged by the respective discharge appliance is a fuel/oxidizer mixture. If no fuel is provided to a premix device, the fluid discharged at the respective discharge appliance is oxidizer only. It is further understood that in particular in a region where the discharge appliances are provided, and downstream thereof, a second combustion stage or combustion zone is formed.

In certain embodiments the combustion appliance may comprise at least one further fuel/oxidizer premix device, wherein the further fuel/oxidizer premix device, at a discharge end thereof, is in fluid communication with a further discharge appliance provided in the duct. The further discharge appliance is arranged and configured to discharge a fluid received from the further fuel/oxidizer premix device into a flow of combustion products in the duct and essentially aligned with a flow direction of the flow of combustion products. Each discharge appliance is disposed and configured to discharge the respective fluid laterally offset with respect to the fluid discharged from each other discharge appliance in a throughflow cross section of the duct, such that in particular the discharge flows from the discharge appliances are provided without an overlap in the throughflow cross section of the duct. The discharge appliances which are in fluid communication with different fuel/oxidizer premix devices may in more specific embodiments be provided in the duct with a mutual offset in a throughflow direction of the duct.

Further disclosed in an embodiment which is not part of the invention, is a gas turbine engine comprising at least one combustion appliance as described above. In certain aspects the at least one fluid discharge device may be provided adjacent and upstream an expansion turbine inlet.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a depiction of a combustion appliance illustrating a method as disclosed above as carried out at a low load;
- Fig. 2: a depiction of the combustion appliance illustrating a method as disclosed above as carried out at a low intermediate load;
- Fig. 3: a depiction of the combustion appliance illustrating a method as disclosed above as carried out at a high intermediate load;
- Fig. 4: a depiction of the combustion appliance illustrating a method as disclosed above as carried out at a high load; and
- Fig. 5: a diagram showing qualitatively an exemplary course of the fuel/oxidizer ratio of the different fluid participating in the combustion.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

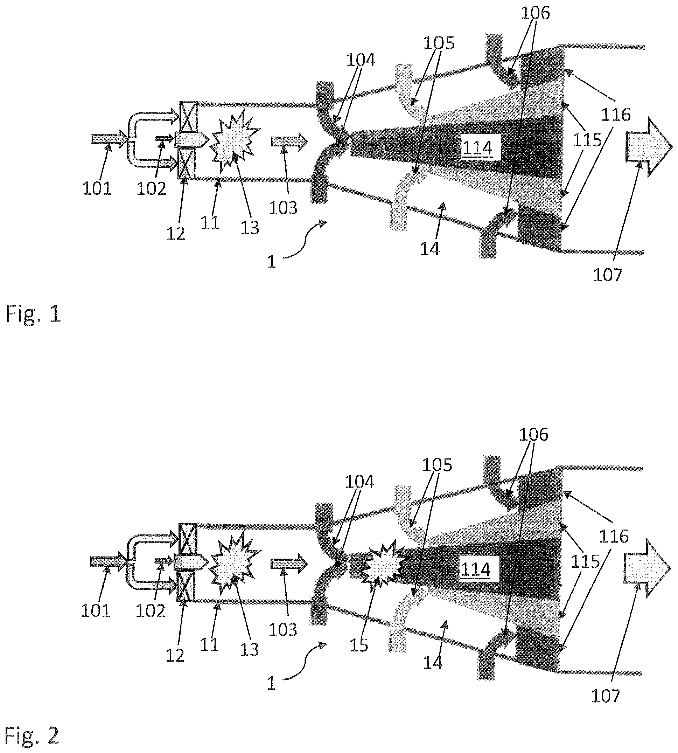

The method for combusting a fuel as disclosed above, and an exemplary combustion appliance suitable for carrying out the method, are lined out in detail by way of an example shown in figures 1 through 4. A combustion appliance 1 generally comprises a first combustion stage 11. A generic burner 12 is provided in fluid communication with and upstream of first combustion stage 11. Burner 12 may be of any known type known to the skilled person, such as, but not limited to, any type of diffusion burner or premix burner as for instance, but not limited to, disclosed in EP 321 809, EP 780 629, WO93/17279 or EP 945 677. The depiction of burner 12 is thus to be understood symbolic, and generally speaking any device suitable for receiving an oxidizer and a fuel and preparing a combustible fuel/oxidizer flow thereof may be applied. An oxidizer mass flow is provided. A first partial mass flow 101 of said oxidizer, for instance compressed air form a compressor of a gas turbine engine, is provided to burner 12. Further, a mass flow of fuel 102 is provided to burner 12. The combustible fuel/oxidizer flow is combusted as illustrated by flame 13. A mass flow 103 of combustion products is generated and flows in a flow direction generally denoted by the arrow at 103 downstream inside the combustion appliance 1 and is received by a duct 14. Within duct 14 mass flows 104, 105 and 106 of supplementary fluids are discharged into duct 14. The discharge of the mass flows of supplementary fluids is effected on the one hand axially staged in the flow direction of the mass flow of combustion products 103. Supplementary fluid mass flow 104 is discharged upstream of supplementary fluid mass flow 105, which in turn is discharged upstream of supplementary fluid mass flow 106. Further, the discharge of the mass flows of supplementary fluids is effected in a laterally staged manner, i.e., staged across the direction of the flow of combustion products 103, or across a flow cross section of duct 14. That is, with respect to the flow of combustion products each mass flow of a supplementary fluid is provided laterally offset from the other mass flows of a supplementary fluid, and adjacent to another mass flow of supplementary fluid. In the shown exemplary embodiment, a mass flow of a supplementary fluid 104 is discharged most upstream the flow of combustion products and the deepest in duct 14, or the closest to a center of duct 14, while a mass flow of a supplementary fluid 106 is discharged the furthest downstream the flow of combustion products and closest to the walls of duct 14. A mass flow of a supplementary fluid 105 is discharged in and across the flow direction between them. In order to discharge the mass flows 104 and 105 of supplementary fluids in an inner region of duct 14, for instance a suitable piping system may be provided as a discharge appliance. Mass flow 106 of supplementary fluid may for instance be discharged through a piping system, or through orifices, for instance circumferentially arranged slits, provided in the walls of duct 14. Other appliances for discharging the mass flows of supplementary fluids at suitable locations in duct 14 are conceivable. Generally, any appliance which is able to discharge the mass flows of supplementary fluids within the duct with the discharge characteristics set forth below may be found suitable. However, the discharge appliances need to be able to withstand the temperature of the flow of combustion products 103. Further, the mass flows of supplementary fluids are discharged in a discharge direction which is at least essentially aligned with the flow of combustion products and oriented downstream the flow of combustion products. The mass flows of discharged supplementary fluids are furthermore provided in directions at least essentially aligned with and parallel to each other. Thus, rapid intermixing between the supplementary fluid mass flows, or between the mass flows of supplementary fluids, is at least largely voided and will only occur comparatively far downstream the respective discharge appliance. Thus, stratified layers 114, 115 and 116 of supplementary fluids are formed. Downstream duct 14 flue gas mass flow 107 is discharged from duct 14. It goes without saying that mass flow 107 is the sum of all mass flows provided to duct 14, i.e. the mass flow 103 of combustion products plus the sum of all mass flows 104, 105 and 106 of supplementary fluids. Further, flue gas mass flow 107 may also comprise coolant. Flue gas mass flow 107 may for instance be guided to an expansion turbine of a gas turbine engine, or another device where a flow of heated fluid is required.

As noted above, combustion appliance 1 comprises a first combustion stage 11, with at least one burner 12, and a duct 14 for receiving a flow of combustion products form the first combustion stage 11. It is noted that a multitude, that is at least two, burners and/or first combustion stages may be provided to provide a common mass flow of combustion products 103 to the duct. Likewise, a mass flow of combustion products provided by a single burner or jointly provided by a multitude of, i.e. at least two, burners in a first combustion stage or first combustion stages may be distributed to a multitude of, i.e. at least two, ducts 14, where supplemental fluid is discharged into the flow of combustion products inside a duct. For instance, the first combustion zone may be provided by a conventional combustion chamber of a gas turbine engine. An annular duct or annularly distributed ducts, equipped with suitable means for discharging supplementary fluid into a flow of combustion products, may be provided upstream an expansion turbine of the gas turbine engine. Discharge appliances for discharging the mass flows 104, 105 and 106 of supplementary fluids are provided in the duct, wherein "in the duct" in this respect may also mean provided at a wall of the duct such as to discharge a fluid into the duct. As noted, the specific structure of the discharge appliances is of minor interest within the frame of the present disclosure, as long as they are suitable to discharge the mass flows of supplementary fluids as required by the herein disclosed method. Although the discharge appliances are not denoted by reference numerals, for the sake of ease and clarity of the depiction, their location is perfectly clear by the depiction of the flows 104, 105 and 106 discharged therefrom. The discharge appliances are provided with a mutual offset in the intended direction of the flow within duct 14, as well as they are arranged with a mutual lateral offset, that is, in a throughflow cross section of the duct, or, in another aspect, are provided to discharge the mass flows of supplemental fluids with a mutual lateral offset. It will become apparent in the light of the description below that each mass flow of a supplemental fluid is provided to a discharge appliance by a fuel/oxidizer premix device, such that each supplemental fluid may be selectively provided as oxidizer or as a premixed fuel/oxidizer mixture. Each fuel/oxidizer premix device is, at a downstream end thereof, in fluid communication with at least one discharge appliance. In particular each discharge appliance is in fluid communication with one fuel/oxidizer premix device only.

When operating combustion appliance 1 in accordance with the herein disclosed method, as mentioned above, a mass flow of fuel 102 is supplied to burner 12 and is combusted with a first oxidizer partial mass flow 101 in first combustion zone 11. In particular at low thermal loads of the combustion appliance, that is, at a comparatively low overall fuel mass flow provided to combustion appliance 1, all mass flows 104, 105 and 106 of supplementary fluids are provided as mere oxidizer, with nor fuel added. Accordingly, all the fuel provided to combustion appliance 1 is combusted in first combustion zone 11, and in first oxidizer partial mass flow 101. First oxidizer partial mass flow 101 may represent 50%, or about 50%, of the overall oxidizer mass flow provided to combustion appliance 1. As only first oxidizer partial mass flow 101, in this case, participates in the actual combustion process, the equivalence ratio of the actual combustion is comparatively high already at a comparatively low overall fuel mass flow. Thus, already at low part load conditions a stable combustion is achieved. The combustion temperature reaches already at low part load conditions a level at which a good and complete burn-out of the fuel, resulting in low emissions of products of incomplete combustion, such as for instance carbon monoxide and unburnt hydrocarbons, is achieved.

It will be appreciated that load may in this respect to be understood as a mass flow specific thermal load, which may, on the one hand be considered as a mass flow specific heat release rate, correlated with the overall fuel/oxidizer ratio or equivalence ratio of the combustion appliance. On the other hand, if thermal load is understood as a parameter describing the conditions of combustion, the temperature of the oxidizer provided needs to be taken into account in determining the thermal load. Control of the combustion appliance may in this respect be performed based upon an appropriate load parameter, considering the most relevant influencing variables. For instance when the combustion appliance is operated in a gas turbine engine, similar overall equivalence ratios may be found at different compressor pressure ratios, and thus the operation modes lined out below may also be controlled dependent on a load parameter of the gas turbine engine. For the ease of description below a "load" in a generic sense will be referred to. The skilled person will readily be able to determine an appropriate load parameter or a set of appropriate load parameters for controlling the operation of the combustion appliance.

As load rises while fuel is only supplied as fuel mass flow 102 to burner 12, while mass flows 104, 105 and 106 of supplementary fluids are provided as pure oxidizer, with no fuel therein, and thus fuel is only combusted in first combustion zone 11, the temperature of flame 13 as well of the mass flow of combustion products 103 rise. This may yield in a dramatic increase in the thermally induced formation of nitric oxides and the pollutant emissions of the combustion appliance. Thus, above a certain threshold load fuel is added to mass flow 104 of supplementary fluid. Mass flow 104 of supplementary fluid is thus provided as a premixed fuel/oxidizer mixture. Reference is in this respect made to figure 2. The oxidizer mass flow contained in mass flow 104 may account for about 25%, or at least approximately 25%, of the total oxidizer mass flow provided to the combustion appliance. Mass flow 104 of supplementary fluid, provided as a premixed fuel oxidizer mass flow, will auto-ignite upon contact with the hot combustion gases from the first combustion stage and is combusted in flame 15, and/or downstream thereof. In particular when a lean premixed fuel/oxidizer mixture is provided, the thermally induced formation of nitric oxides is rather low. Due to the already hot combustion products 103 from first combustion stage 11 the premixed fuel/oxidizer mixture will be reliably combusted over a large range on premix equivalence ratios. Mass flow 104 of supplementary fluid is discharged the most upstream duct 14, and thus the residence time of the fuel, or fuel residues, respectively, in duct 14 is sufficiently high to allow for a complete burn-out of the fuel provided therein. Fuel mass flow 102 may be controlled to maintain the equivalence ratio in first combustion stage 11 at least essentially constant. In another embodiment, fuel mass flow 102 may be controlled to maintain the temperature of the first stage combustion products at least essentially constant, for instance in a 1800K range, or at least approximately at 1800K. This temperature level ensures reliable auto-ignition of any fuel/oxidizer premix flow discharges into the flow of first stage combustion products 103, while the thermally induced nitric oxides formation in the first combustion stage is still maintained at an acceptable level.

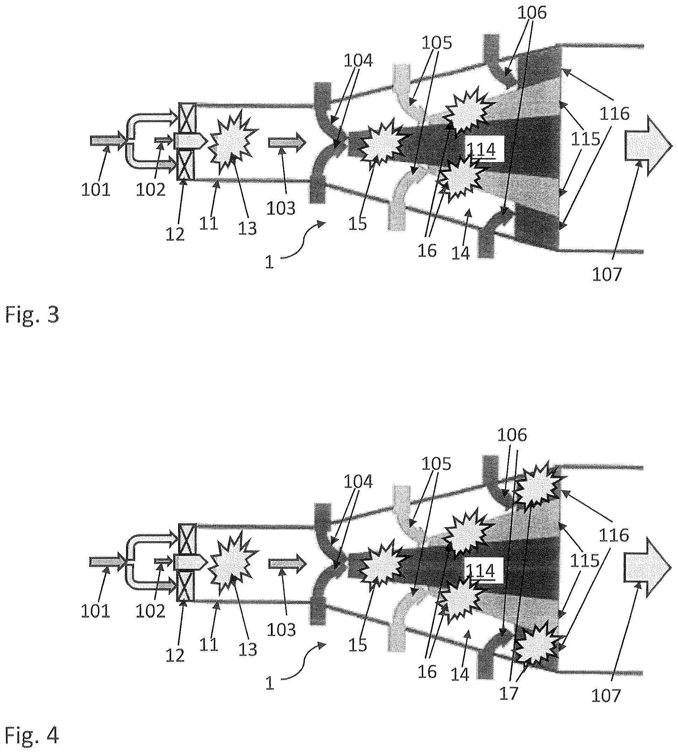

The richer the fuel/oxidizer mixture provided as the mass flow 104 of supplementary fluid is, the higher will the nitric oxide generation become. Thus, for load parameters exceeding a further threshold level also mass flow 105 of supplementary fluid will be provided as a lean premixed fuel/oxidizer mixture. The oxidizer mass flow contained in supplementary fluid mass flow 105 may account for about 15%, or at least approximately 15%, of the total oxidizer mass flow provided to the combustion appliance. Mass flow 105 of supplementary fluid is discharged into duct 14 such as to form a fluid layer 115 adjacent fluid layer 114 formed by mass flow 104. As illustrated in figure 3, the fuel/oxidizer mixture provided as supplementary fluid mass flow 105 auto-ignites and fuel therein contained is combusted in flame 16, and downstream thereof. If a suitable load parameter exceeds still a further threshold value, also mass flow 106 of a supplementary fluid is provided as a premixed fuel oxidizer mixture. The oxidizer mass flow contained in supplementary fluid mass flow 106 may account for about 10%, or at least approximately 10%, of the total oxidizer mass flow provided to the combustion appliance. As illustrated in figure 4, the fuel/oxidizer mixture provided as supplementary fluid mass flow 106 auto-ignites and fuel therein contained is combusted in flame 17, and downstream thereof.

In considering a total oxidizer mass flow provided to the combustion appliance this, as a matter of course, also takes into account the oxidizer partial mass flow which participated in generating the mass flow of combustion products provided to the combustion appliance.

Each of the mass flows 104, 105 and 106 of a supplementary fluid may be selectively provided as pure oxidizer or as a premixed fuel/oxidizer mixture in selectively providing fuel to the respective premix device, or not. It is conceivable that the mutual ratio of premix fuel mass flows provided in each of the mass flows of a supplementary fluid, if said supplementary fluid is provided as a fuel/oxidizer mixture, is constant. This enables to provide the combustion appliance with only one premix fuel control valve, and for the individual premixed devices only shut-off valves need to be provided.

As becomes apparent from the explanations above with respect to figures 1 through 4, additional fuel is provided to duct 14 the further downstream the higher the load threshold value for activating the fuel supply is. The temperature in duct 14 increases in a downstream flow direction. In turn, the residence time of the premix fuel, or the combustion products generated therefrom, respectively, is the shorter the higher the threshold load value for activating the supply of fuel is. In other words, the higher the combustion temperature is, the shorter is the residence time. This enables on the one hand a complete burn-out of the fuel before the resulting flue gas mass flow 107 is discharged at a downstream end of duct 14, while on the other hand the thermally induced formation of nitric oxides is limited.

The disclosed method of a stratified axially staged combustion thus provides a combustion process with low pollutant emissions throughout a large load range, and furthermore exhibits an excellent part load operation behavior and accordingly provides a good turndown ratio.

While duct 14 is shown with a widening cross section in a downstream direction, such as to adapt for the increasing mass flow and temperature, embodiments are conceivable in which the duct is provided with a constant flow cross-section, resulting in performing the method in an accelerating flow.

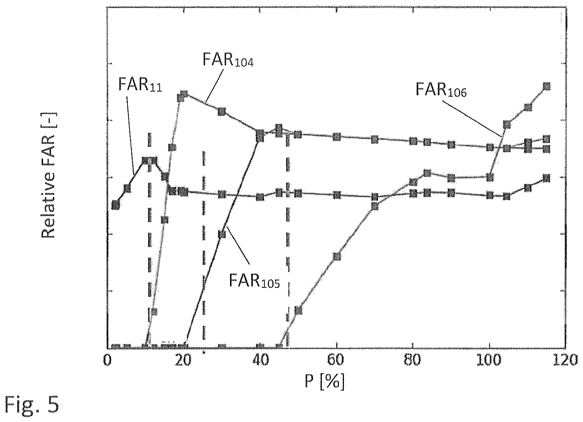

Fig. 5 shows an exemplary qualitative course of the fuel/oxidizer, or, in the specific example, fuel/air ratio FAR of the different fuel/oxidizer flows over the relative load P of a gas turbine engine. The ordinate, vertical axis, is shown without scaling, as only the relative change of the fuel/air ration of the different combustion stages is to be illustrated. As becomes apparent, at low loads fuel is only supplied to the first combustion stage 11. At a certain threshold load, fuel is provided to the mass flow 104 of supplementary fluid, while the fuel/air ratio FAR₁₁ of the first combustion stage is gradually reduced and further is maintained constant over the load. In this respect, the fuel combusted in the first oxidizer partial mass flow in first combustion stage 11 provides a basic load, while load control at a load above approximately 10% is achieved in controlling the mass flows of fuel provided to supplementary fluid flow 104, 105 and 106. The fuel/air ratio FAR₁₀₄ , FAR₁₀₅, and FAR₁₀₆ in a supplemental fluid mass flows 104, 105 and 106 is increased up to a value where nitric oxides generation starts to become unacceptable. At higher load, consequently fuel is provided to a consecutive mass flow of supplemental fluid. At approximately 10% relative load, fuel air ratio FAR₁₀₄ of the mass flow of supplementary fluid 104 is increased up to approximately 20% relative load, when an increasing fuel mass flow is added to the mass flow of supplementary fluid 105. Fuel/air ratio FAR₁₀₄ is gradually decreased and maintained constant at higher loads. Fuel/air ratio FAR₁₀₅ of the mass flow of supplementary fluid 105 is increased up to a certain level. To further increase load, fuel is provided to the mass flow of supplementary fluid 106, and the respective fuel/air ratio FAR₁₀₆ increases up to the gas turbine engine rated power. Between approximately 80% relative load and 100% relative load, fuel/air ratio FAR₁₀₆ is approximately constant. This is due to the fact of an opening variable inlet guide vane of the gas turbine engine, which yields in an increasing air mass flow. Thus, although the fuel mass flow is increase, the fuel/air ratios remain approximately constant in this load range, or actually experience a slight decrease, due to the increasing compressor pressure ratio and the accordingly increasing temperature of the combustion air, which allow less fuel to be combusted to reach a certain combustion temperature. Qualitatively, similar observation will be made applying a different appropriate load parameter. It is readily appreciated that these observations can easily be generalized to a fuel/oxidizer ratio instead of the more specific fuel/air ratio.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: combustion appliance
- 11: first combustion stage
- 12: burner
- 13: flame
- 14: duct
- 15: flame
- 16: flame
- 17: flame
- 101: first oxidizer partial mass flow
- 102: mass flow of fuel
- 103: combustion products, mass flow of combustion products
- 104: supplementary fluid, mass flow of supplementary fluid
- 105: supplementary fluid, mass flow of supplementary fluid
- 106: supplementary fluid, mass flow of supplementary fluid
- 107: flue gas mass flow
- 114: supplementary fluid layer
- 115: supplementary fluid layer
- 116: supplementary fluid layer

- FAR: fuel/air ratio, fuel/oxidizer ratio
- FAR₁₁: fuel/air ratio, fuel/oxidizer ratio of first combustion stage
- FAR₁₀₄: fuel/air ratio, fuel/oxidizer ratio if supplementary fluid 104
- FAR₁₀₅: fuel/air ratio, fuel/oxidizer ratio if supplementary fluid 105
- FAR₁₀₆: fuel/air ratio, fuel/oxidizer ratio if supplementary fluid 106
- P: load parameter, relative load of gas turbine engine

## Claims

1. A method for combusting a fuel in a gas turbine engine, the method comprising
providing an oxidizer mass flow,
providing a first oxidizer partial mass flow (101),
combusting a fuel (102) in the first oxidizer partial mass flow in a first combustion stage (11) thus providing a mass flow of combustion products (103),
providing the mass flow of combustion products to a duct (14), and ducting the mass flow of combustion products through said duct in a flow direction, discharging a mass flow of a first supplementary fluid (104) into said duct, discharging the mass flow of the first supplementary fluid in a discharge direction essentially aligned with the flow direction such as to provide a flow of the first supplementary fluid (104) essentially aligned with the flow of combustion products (103), wherein the first supplementary fluid is selectively provided as one of an oxidizer and a premixed fuel/oxidizer mixture;
discharging further mass flows of a second supplementary fluid (105) and of a third supplementary fluid (106) into the duct, wherein the second supplementary fluid (105) and the third supplementary fluid (106) are selectively provided as one of an oxidizer and a premixed fuel/oxidizer mixture,
discharging the second supplementary fluid (105) and the third supplementary fluid (106) essentially aligned with the flow direction, wherein the second supplementary fluid (105) and the third supplementary fluid (106) are discharged laterally offset with respect to the discharged mass flow of first supplementary fluid (104) and across the flow cross section of the duct, such as to provide the mass flows of supplementary fluids as laterally stratified layers (114, 115, 116) of the respective supplementary fluids,
**characterized in that** at a threshold load, fuel is provided to the first supplementary fluid (104), while a fuel/air ratio (FAR₁₁) of the first combustion stage (11) is gradually reduced and further is maintained constant over the load, at approximately 10% and up to 20% relative load, a fuel/air ratio (FAR₁₀₄) of the first supplementary fluid (104) is increased and is gradually decreased and maintained constant at higher loads,
at 20% relative load, an increasing fuel mass flow is added to the mass flow of the second supplementary fluid (105) and the a fuel/air ratio (FAR₁₀₅) of the mass flow of the second supplementary fluid (105) is increased and to further increase load, fuel is provided to the mass flow of the third supplementary fluid (106) and a fuel/air ratio (FAR₁₀₆) of the third supplementary fluid (106) is increased up to the gas turbine engine rated power.

2. The method according to the preceding claim, **characterized in** comprising discharging at least two further mass flows of further supplementary fluids (105, 106), wherein each further mass flow is discharged with a different lateral offset with respect to the flow of the first supplementary fluid and across the flow cross section of the duct, such as to provide the mass flows of supplementary fluids as laterally stratified layers (114, 115, 116) of the respective supplementary fluid.

3. The method according to the preceding claim, **characterized in** comprising providing each layer (114, 115, 116) of further supplementary fluid laterally adjacent at least one other layer of supplementary fluid.

4. The method according to any of the preceding claims **characterized in** comprising discharging each mass flow of supplementary fluid (104, 105, 106) at a different location along the flow direction.

5. The method according to any of the preceding claims, **characterized in** comprising operating the combustion appliance at different thermal loads, providing each mass flow of a supplementary fluid (104, 105, 106) as a mass flow of oxidizer when the combustion appliance is operated at or below a first threshold value of a thermal load parameter, and providing the mass flow of at least one supplementary fluid as a premixed fuel/oxidizer mass flow when the combustion appliance is operated above the first threshold value of the thermal load parameter.

6. The method according to any of the preceding claims, **characterized in** comprising providing a supplementary fluid as oxidant when the combustion appliance is operated at or below a respective threshold value of a load parameter, and providing the supplementary fluid as a premixed fuel/oxidizer mixture when the combustion appliance is operated above the respective threshold value of the load parameter, such that a number of supplementary fluids which are provided as a premixed fuel/oxidizer mixture increases stepwise with increasing thermal load at which the combustion appliance is operated and decreases with a decreasing thermal load at which the appliance is operated.

7. The method according to the preceding claim, **characterized in** comprising choosing a respective threshold value of the load parameter the higher the further downstream of the flow of combustion products the respective supplementary fluid is discharged.

8. The method according to any of the preceding claims, **characterized in** comprising operating the gas turbine engine at different loads of the gas turbine engine, providing each of the mass flows of a supplementary fluid as a mass flow of oxidizer when the gas turbine engine is operated at or below a first threshold value of a load parameter of the gas turbine engine, and providing the mass flow of at least one supplementary fluid as a premixed fuel/oxidizer mass flow when the gas turbine engine is operated above the first threshold value of the load parameter of the gas turbine engine.

9. The method according to the preceding claim, **characterized in** comprising providing a supplementary fluid (014, 105, 106) as oxidant when the gas turbine engine is operated at or below a respective threshold value of a load parameter of the gas turbine engine, and providing the supplementary fluid as a premixed fuel/oxidizer mixture when the gas turbine engine is operated above the respective threshold value of the load parameter of the gas turbine engine, such that a number of supplementary fluids which are provided as a premixed fuel/oxidizer mixture increases stepwise with increasing load of the gas turbine engine and decreases with a decreasing load of the gas turbine engine.

10. The method according to the preceding claim and according to claim 4, **characterized in** comprising choosing a respective threshold value of the load parameter of the gas turbine engine the higher the further downstream of the flow of combustion products the respective supplementary fluid is discharged.

## Patentansprüche

1. Verfahren zum Verbrennen eines Brennstoffs in einem Gasturbinentriebwerk, wobei das Verfahren umfasst Bereitstellen eines Oxidationsmittel-Massenstroms, Bereitstellen eines ersten Oxidationsmittel-Teilmassenstroms (101),
Verbrennen eines Brennstoffs (102) im ersten Oxidationsmittel-Teilmassenstrom in einer ersten Verbrennungsstufe (11), wodurch ein Massenstrom von Verbrennungsprodukten (103) bereitgestellt wird,
Bereitstellen des Massenstroms von Verbrennungsprodukten für eine Leitung (14), und Leiten des Massenstroms von Verbrennungsprodukten durch die Leitung in einer Strömungsrichtung,
Abgeben eines Massenstroms eines ersten Zusatzfluids (104) in die Leitung,
Abgeben des Massenstroms des ersten Zusatzfluids in einer Abgaberichtung, die im Wesentlichen an der Strömungsrichtung ausgerichtet ist, so dass ein Strom des ersten Zusatzfluids (104) bereitgestellt wird, die im Wesentlichen an der Strömung von Verbrennungsprodukten (103) ausgerichtet ist, wobei das erste Zusatzfluid selektiv entweder als Oxidationsmittel oder als vorgemischtes Brennstoff/Oxidationsmittel-Gemisch bereitgestellt wird;
Abgeben weiterer Massenströme eines zweiten Zusatzfluids (105) und eines dritten Zusatzfluids (106) in die Leitung, wobei das zweite Zusatzfluid (105) und das dritte Zusatzfluid (106) selektiv entweder als Oxidationsmittel oder vorgemischtes Brennstoff/Oxidationsmittel-Gemisch bereitgestellt werden, Abgeben des zweiten Zusatzfluids (105) und des dritten Zusatzfluids (106), die im Wesentlichen an der Strömungsrichtung ausgerichtet sind,
wobei das zweite Zusatzfluid (105) und das dritte Zusatzfluid (106) seitlich versetzt in Bezug auf den abgegebenen Massenstrom des ersten Zusatzfluids (104) und über den Strömungsquerschnitt des Kanals abgegeben werden, dergestalt, dass die Massenströme von Zusatzfluiden als seitlich geschichtete Schichten (114, 115, 116) der jeweiligen Zusatzfluide bereitgestellt werden, **dadurch gekennzeichnet, dass** bei einer Schwellenlast dem ersten Zusatzfluid (104) Brennstoff zugeführt wird, während ein Brennstoff/LuftVerhältnis (FAR₁₁) der ersten Verbrennungsstufe (11) allmählich verringert und ferner über die Last weiter konstant gehalten wird, bei einer relativen Last von etwa 10 % und bis zu 20 % ein Kraftstoff/Luft-Verhältnis (FAR₁₀₄) des ersten Zusatzfluids (104) erhöht und allmählich verringert und bei höheren Lasten konstant gehalten wird, bei 20 % relativer Last dem Massenstrom des zweiten Zusatzfluids (105) ein zunehmender Kraftstoffmassenstrom hinzugefügt wird und das Kraftstoff/Luft-Verhältnis (FAR₁₀₅) des Massenstroms des zweiten Zusatzfluids (105) erhöht und zur weiteren Erhöhung der Last dem Massenstrom des dritten Zusatzfluids (106) Kraftstoff zugeführt und ein Kraftstoff/Luft-Verhältnis (FAR₁₀₆) des dritten Zusatzfluids (106) bis zur Nennleistung des Gasturbinentriebwerks erhöht wird.

2. Verfahren nach dem vorhergehenden Anspruch, **dadurch gekennzeichnet, dass** es das Abgeben von mindestens zwei weiteren Massenströmen von weiteren Zusatzfluiden (105, 106) umfasst, wobei jeder weitere Massenstrom mit einem unterschiedlichen seitlichen Versatz in Bezug auf die Strömung des ersten Zusatzfluids und über den Strömungsquerschnitt des Kanals abgegeben wird, so dass die Massenströme der Zusatzfluide als seitlich geschichtete Schichten (114, 115, 116) des jeweiligen Zusatzfluids bereitgestellt werden.

3. Verfahren nach dem vorhergehenden Anspruch, **dadurch gekennzeichnet, dass** es umfasst, das Bereitstellen jeder Schicht (114, 115, 116) weiteren Zusatzfluids seitlich neben mindestens einer anderen Schicht von Zusatzfluid.

4. Verfahren nach einem der vorhergehenden Ansprüche, **dadurch gekennzeichnet, dass** es das Abgeben jedes Massenstroms von Zusatzfluid (104, 105, 106) an einer anderen Stelle entlang der Strömungsrichtung umfasst.

5. Verfahren nach einem der vorhergehenden Ansprüche, **dadurch gekennzeichnet, dass** es umfasst:
Betreiben der Verbrennungsvorrichtung bei unterschiedlichen thermischen Lasten,
Bereitstellen jedes Massenstroms eines Zusatzfluids (104, 105, 106) als Massenstrom eines Oxidationsmittels, wenn die Verbrennungsvorrichtung bei oder unter einem ersten Schwellenwert eines thermischen Lastparameters betrieben wird, und
Bereitstellen des Massenstroms mindestens eines Zusatzfluids als vorgemischter Brennstoff/Oxidationsmittel-Massenstrom, wenn die Verbrennungsvorrichtung über dem ersten Schwellenwert des thermischen Lastparameters betrieben wird.

6. Verfahren nach einem der vorstehenden Ansprüche, **dadurch gekennzeichnet, dass** es umfasst
Bereitstellen eines Zusatzfluids als Oxidationsmittel, wenn die Verbrennungsvorrichtung bei oder unterhalb eines jeweiligen Schwellenwertes eines thermischen Lastparameters betrieben wird, und Bereitstellen des Zusatzfluid als vorgemischtes Brennstoff/Oxidationsmittel-Gemisch, wenn die Verbrennungsvorrichtung oberhalb des jeweiligen Schwellenwertes des Lastparameters betrieben wird, so dass eine Anzahl von Zusatzfluiden, die als vorgemischtes Brennstoff/Oxidationsmittel-Gemisch bereitgestellt werden, mit zunehmender thermischer Last, bei der die Verbrennungsvorrichtung betrieben wird, schrittweise zunimmt und mit abnehmender thermischer Last, bei der die Vorrichtung betrieben wird, abnimmt.

7. Verfahren nach dem vorstehenden Anspruch, **dadurch gekennzeichnet, dass** es umfasst die Wahl eines entsprechenden höheren Schwellenwertes des Lastparameters, je weiter stromabwärts des Stroms von Verbrennungsprodukten das jeweilige Zusatzfluid abgegeben wird.

8. Verfahren nach einem der vorhergehenden Ansprüche, **dadurch gekennzeichnet, dass** es umfasst
Betreiben der Gasturbine bei verschiedenen Lasten der Gasturbine,
Bereitstellen jedes der Massenströme eines Zusatzfluids als Massenstrom eines Oxidationsmittels, wenn die Gasturbine bei oder unter einem ersten Schwellenwert eines Lastparameters der Gasturbine betrieben wird, und
Bereitstellen des Massenstroms mindestens eines Zusatzfluids als vorgemischter Brennstoff/Oxidationsmittel-Massenstrom, wenn die Gasturbine über dem ersten Schwellenwert des Lastparameters der Gasturbine betrieben wird.

9. Verfahren nach dem vorhergehenden Anspruch, **dadurch gekennzeichnet, dass** es umfasst
Bereitstellen eines Zusatzfluids (014, 105, 106) als Oxidationsmittel, wenn das Gasturbinentriebwerk bei oder unter einem entsprechenden Schwellenwert eines Lastparameters des Gasturbinentriebwerks betrieben wird, und Bereitstellen des Zusatzfluids als vorgemischtes Brennstoff/Oxidationsmittel-Gemisch, wenn das Gasturbinentriebwerk über dem jeweiligen Schwellenwert des Lastparameters des Gasturbinentriebwerks betrieben wird, so dass eine Anzahl von Zusatzfluiden, die als vorgemischtes Brennstoff/Oxidationsmittel-Gemisch bereitgestellt werden, mit zunehmender Last des Gasturbinentriebwerks schrittweise zunimmt und mit abnehmender Last des Gasturbinentriebwerks abnimmt.

10. Verfahren nach dem vorhergehenden Anspruch und nach Anspruch 4, **dadurch gekennzeichnet, dass** es umfasst Wählen eines entsprechenden Schwellenwertes des Lastparameters des Gasturbinentriebwerks, je höher, je weiter stromabwärts des Stroms von Verbrennungsprodukten das jeweilige Zusatzfluid ausgestoßen wird.

## Revendications

1. Procédé de combustion d'un combustible dans un moteur à turbine à gaz,
le procédé comprenant
la fourniture d'un flux massique d'oxydant,
la fourniture d'un premier flux massique partiel d'oxydant (101),
la combustion d'un combustible (102) dans le premier flux massique partiel d'oxydant dans un premier étage de combustion (11) de façon à fournir un flux massique de produits de combustion (103),
la fourniture du flux massique de produits de combustion dans un conduit (14), et la conduite du flux massique de produits de combustion à travers ledit conduit dans une direction d'écoulement, l'évacuation d'un flux massique d'un premier fluide supplémentaire (104) dans ledit conduit, l'évacuation du flux massique du premier fluide supplémentaire dans une direction d'évacuation pratiquement alignée avec la direction d'écoulement de façon à produire un écoulement du premier fluide supplémentaire (104) pratiquement aligné avec l'écoulement de produits de combustion (103), dans lequel le premier fluide supplémentaire est sélectivement fourni sous la forme d'un oxydant et d'un mélange de combustible/oxydant prémélangé ;
l'évacuation de flux massiques supplémentaires d'un deuxième fluide supplémentaire (105) et d'un troisième fluide supplémentaire (106) dans le conduit, dans lequel le deuxième fluide supplémentaire (105) et le troisième fluide supplémentaire (106) sont sélectivement fournis sous la forme d'un oxydant et d'un mélange de combustible/oxydant prémélangé, l'évacuation du deuxième fluide supplémentaire (105) et du troisième fluide supplémentaire (106) pratiquement alignés avec la direction d'écoulement, dans lequel le deuxième fluide supplémentaire (105) et le troisième fluide supplémentaire (106) sont évacués de façon latéralement décalée par rapport au flux massique de premier fluide supplémentaire évacué (104) et à travers la section transversale d'écoulement du conduit, de façon à fournir les flux massiques de fluides supplémentaires sous la forme de couches latéralement stratifiées (114, 115, 116) des fluides supplémentaires respectifs,
**caractérisé en ce que**, à une charge de seuil, un combustible est fourni au premier fluide supplémentaire (104), tandis qu'un rapport combustible/air (FAR₁₁) du premier étage de combustion (11) est progressivement diminué et est ensuite maintenu constant sur la charge, à approximativement 10 % et jusqu'à 20 % de charge relative, un rapport combustible/air (FAR₁₀₄) du premier fluide supplémentaire (104) est augmenté et est progressivement diminué et maintenu constant à des charges plus élevées, à 20 % de charge relative, un flux massique de combustible croissant est ajouté au flux massique du deuxième fluide supplémentaire (105) et un rapport combustible/air (FAR₁₀₅) du flux massique du deuxième fluide supplémentaire (105) est augmenté et pour augmenter plus avant la charge, du combustible est fourni au flux massique du troisième fluide supplémentaire (106) et un rapport combustible/air (FAR₁₀₆) du troisième fluide supplémentaire (106) est augmenté jusqu'à la puissance nominale du moteur à turbine à gaz.

2. Procédé selon la revendication précédente, **caractérisé en ce qu'**il comprend l'évacuation d'au moins deux flux massiques supplémentaires d'autres fluides supplémentaires (105, 106), dans lequel chaque flux massique supplémentaire est évacué avec un décalage latéral différent par rapport à l'écoulement du premier fluide supplémentaire et à travers la section transversale d'écoulement du conduit, de façon à fournir les flux massiques de fluides supplémentaires sous la forme de couches latéralement stratifiées (114, 115, 116) du fluide supplémentaire respectif.

3. Procédé selon la revendication précédente, **caractérisé en ce qu'**il comprend la disposition de chaque couche (114, 115, 116) d'autre fluide supplémentaire latéralement adjacente à au moins une autre couche de fluide supplémentaire.

4. Procédé selon l'une quelconque des revendications précédentes **caractérisé en ce qu'**il comprend l'évacuation de chaque flux massique de fluide supplémentaire (104, 105, 106) à un emplacement différent le long de la direction d'écoulement.

5. Procédé selon l'une quelconque des revendications précédentes, **caractérisé en ce qu'**il comprend
l'actionnement du dispositif de combustion à différentes charges thermiques, la fourniture de chaque flux massique d'un fluide supplémentaire (104, 105, 106) sous la forme d'un flux massique d'oxydant lorsque le dispositif de combustion est actionné à ou au-dessous d'une première valeur de seuil d'un paramètre de charge thermique, et
la fourniture du flux massique d'au moins un fluide supplémentaire sous la forme d'un flux massique de combustible/oxydant prémélangé lorsque le dispositif de combustion est actionné au-dessus de la première valeur de seuil du paramètre de charge thermique.

6. Procédé selon l'une quelconque des revendications précédentes, **caractérisé en ce qu'**il comprend la fourniture d'un fluide supplémentaire en tant qu'oxydant lorsque le dispositif de combustion est actionné à ou au-dessous d'une valeur de seuil respective d'un paramètre de charge, et la fourniture du fluide supplémentaire sous la forme d'un mélange de combustible/oxydant prémélangé lorsque le dispositif de combustion est actionné au-dessus de la valeur de seuil respective du paramètre de charge, de sorte qu'un nombre de fluides supplémentaires qui sont fournis sous la forme d'un mélange de combustible/oxydant prémélangé augmente pas à pas avec l'augmentation de la charge thermique à laquelle le dispositif de combustion est actionné et diminue avec une charge thermique décroissante à laquelle le dispositif est actionné.

7. Procédé selon la revendication précédente, **caractérisé en ce qu'**il comprend le choix d'une valeur de seuil respective du paramètre de charge d'autant plus élevée que le fluide supplémentaire respectif est évacué plus en aval de l'écoulement de produits de combustion.

8. Procédé selon l'une quelconque des revendications précédentes,
**caractérisé en ce qu'**il comprend
l'actionnement du moteur à turbine à gaz à différentes charges du moteur à turbine à gaz, la fourniture de chacun des flux massiques d'un fluide supplémentaire sous la forme d'un flux massique d'oxydant lorsque le moteur à turbine à gaz est actionné à ou au-dessous d'une première valeur de seuil d'un paramètre de charge du moteur à turbine à gaz, et la fourniture du flux massique d'au moins un fluide supplémentaire sous la forme d'un flux massique de combustible/oxydant prémélangé lorsque le moteur à turbine à gaz est actionné au-dessus de la première valeur de seuil du paramètre de charge du moteur à turbine à gaz.

9. Procédé selon la revendication précédente, **caractérisé en ce qu'**il comprend la fourniture d'un fluide supplémentaire (014, 105, 106) en tant qu'oxydant lorsque le moteur à turbine à gaz est actionné à ou au-dessous d'une valeur de seuil respective d'un paramètre de charge du moteur à turbine à gaz, et la fourniture du fluide supplémentaire sous la forme d'un mélange de combustible/oxydant prémélangé lorsque le moteur à turbine à gaz est actionné au-dessus de la valeur de seuil respective du paramètre de charge du moteur à turbine à gaz, de sorte qu'un nombre de fluides supplémentaires qui sont fournis sous la forme d'un mélange de combustible/oxydant prémélangé augmente pas à pas avec l'augmentation de la charge du moteur à turbine à gaz et diminue avec une charge décroissante du moteur à turbine à gaz.

10. Procédé selon la revendication précédente et selon la revendication 4, **caractérisé en ce qu'**il comprend
le choix d'une valeur de seuil respective du paramètre de charge du moteur à turbine à gaz d'autant plus élevée que le fluide supplémentaire respectif est évacué plus en aval de l'écoulement de produits de combustion.
